# EUROPEAN PATENT APPLICATION

(11) **EP 0 836 133 A2**
(43) Date of publication of application: **15.04.1998**
(21) Application number: 97117408.1
(22) Date of filing: 08.10.1997
(51) Int. Cl.: G06F 1/18

(54) **Computer instrument docking apparatus**

(30) Priority: 08.10.1996 US 729802
(71) Applicant: Spectronic Instruments, Inc., Rochester, New York 14625 (US)
(72) Inventor: Shestock, Michael A., Rush, NY 14543 (US); Greene, Gary R., Penfield, NY 14526 (US)
(74) Representative: Wagner, Karl H., Dipl.-Ing.

(57) **Abstract**

The invention is a docking apparatus for docking a computer instrument, such as a spectrophotometer, into an interior of a computer assembly housing. In one embodiment, the apparatus includes a sleeve which is adapted for installation into a disc drive port of a computer assembly and is further adapted to receive a computer instrument. The sleeve may have installed thereon a single connector that is interfaced to both power and data transmission terminals of the computer assembly, and may further have a locking device for locking an instrument received on the sleeve in locked position so as to prevent theft of the received instrument.

## Description

### Background of the Invention:

### 1. Field of the Invention:

The invention relates in general to apparatuses for connecting computer systems together, and in particular an apparatus for docking an instrument that stores, generates or processes computer-readable information onto a computer assembly such as a personal computer.

### 2. Background of the Prior Art:

Since use of personal computers has become widespread, there has been a need to connect computer systems together to store information processed or stored in a first computer system on a memory device of a second computer system, or to, for example, utilize the more powerful computational, processing, or display capabilities of a second computer assembly.

The most common method for connecting two computer assemblies together is the method which involves connecting a data transmission cable between the two computer assemblies. In this method a data transmission cable is connected between an external serial port connector of a first computer assembly and an external serial port connector of a second computer assembly. While the method is useful and rather inexpensive, it exhibits numerous disadvantages. If one of the computer assemblies is a personal computer, for example, the method normally requires the sometimes cumbersome process step of connecting a cable connector to a serial port connector located in the rear of a computer housing where it is difficult to locate. The method further requires two connection steps: One for connecting the cable to a first computer system and second for connecting a cable to a second computer system. Another disadvantage is that the connection method cannot be easily adapted to provide prevention against theft of one of the systems. A still further limitation is that the connecting method does not physically stabilize either of the assemblies.

There remains a need for an apparatus that facilitates a connection between two computer systems that does not exhibit the disadvantages of prior art connection methods.

### Summary of the Invention:

According to its major aspects and broadly stated, the present invention is an apparatus for docking an instrument containing computer-readable information in the interior of a computer assembly housing.

The apparatus includes a docking sleeve which may be specially adapted for installation in a disk drive port of a personal computer. According to the invention, an instrument is received in the sleeve which is received in the interior of a computer assembly housing. In one embodiment, the sleeve comprises a rigid frame having a face plate that is substantially flush with the exterior of the computer housing when the sleeve is fully installed. An inner edge of the face plate may be shaped complementarily with the shape of the instrument housing to improve the ease with which an instrument is received in the frame. Further, guide members which extend into the interior of the housing may be formed along the length of the sleeve to further aid in the reception of an instrument into the sleeve. The sleeve may be securely attached to the housing interior by any conventional mounting methods including by way of screws, bolts, clamps, or adhesives.

The docking apparatus may further include electrical connection components which facilitate both power and data communication between the computer housing and the instrument. A data port connector may be mounted to the docking sleeve which matingly receives a complementarily formed instrument disposed connector when an instrument is docked. An electrical Y-shaped Y-adapter may be connected between the sleeve connector and both power and data terminals of the computer assembly to provide transmission of both power from the computer to the instrument, and transmission of data between the computer assembly and the instrument. Thereby, an instrument received in the docking sleeve is provided with power and data communication simply by interfacing a single connector of the instrument with a connector of the computer assembly.

In another aspect of the invention, the docking sleeve may be equipped with a locking device for securely locking an instrument to the sleeve for the purpose of preventing unauthorized removal of the instrument from the sleeve or housing. The locking device can include a key hole opening toward the sleeve front member. When actuated, a locking member of the locking device engages a formation, such as a notch, formed on the instrument to lock an instrument in a locked position.

The instrument which is docked in the docking station of the invention is typically a portable measuring instrument capable of storing computer-readable data. Generally, an instrument will be docked so that data can be downloaded and stored, processed using data processing software of a personal computer, or displayed utilizing the improved graphics capabilities of a computer assembly such as a personal computer.

An instrument adapted for docking in the docking apparatus normally comprises a rigid instrument housing having a distal end adapted to extend inwardly into a computer assembly housing when docked, and a proximal end extending at least partially outwardly from a computer assembly housing when the instrument is docked. For facilitating data transfer, an instrument connector is disposed on the distal end of the instrument for engaging a sleeve connector disposed on the docking sleeve. The instrument should have a substantially uniform cross section that is shaped to complement the guide frame of the inner sleeve. While the cross-section of the instrument housing can be circular it is preferably of a geometric configuration such that the instrument is oriented to a predetermined orientation in the computer housing when it is received in the computer housing. Orienting the instrument to a predetermined orientation ensures that the connectors of the instrument and sleeve engage over another when an instrument is received in a sleeve.

In one embodiment of the invention, the instrument is a spectrophotometer having a transmittance cell for receiving material-containing vials or other small samples. When the instrument is a spectrophotometer having a transmittance cell, the transmittance cell is oriented on the instrument housing top toward the proximal end of the instrument housing so that the transmittance cell is completely exposed when the instrument is fully docked. In this way, samples can be inserted into the transmittance cell for analysis when a spectrophotometer instrument adapted for use with the present invention is fully docked.

A major advantage of the docking apparatus of the invention is that the apparatus facilitates simplified one-handed connection between an instrument that contains computer-readable data and computer assembly which may be a personal computer. The invention takes advantage of a computer assembly's inherent weight and stability to provide a stable mounting base on which to mount an instrument containing computer-readable information. An instrument can be mounted to a mounting apparatus formed on a computer assembly simply by urging the instrument toward the assembly, without providing an additional mounting structure and without further stabilization of the docking apparatus.

Docking an instrument in the interior of a computer assembly housing facilitates simplified guiding of an instrument in a predetermined orientation with respect to the docking apparatus. In addition, the housing of the computer assembly, when an instrument is internally docked, serves the dual functions of protecting computer assembly components from outside dust and debris, and of protecting the instrument from intrusion of outside dust and debris.

While prior art computer system connection schemes provide data transmission only between computer systems, the present invention physically stabilizes a docked instrument and can be adapted to provide power to a docked instrument in addition to providing for a data communicator.

These and other features of the invention will become clear from a reading of the ensuing Detailed Description of the Preferred Embodiment in connection with the appended claims.

### Brief Description of the Drawings:

In the drawings, wherein like numerals are used to indicate the same elements throughout the views,
Fig. 1 is a perspective view of a computer assembly having a computer instrument docked therein in accordance with the invention;
Fig. 2 is a perspective view of a computer assembly having a cutaway section showing a docking apparatus according to the invention;
Fig. 3 is a front perspective view of a docking sleeve of a docking apparatus according to the invention;
Fig. 4 is a rear perspective view of a docking sleeve of a docking apparatus according to the invention;
Fig. 5 is a schematic electrical diagram illustrating electrical connection between a sleeve connector and both power and data transmission terminals of a computer assembly;
Fig. 6 is side view of a spectrophotometer instrument which may be docked in docking apparatus according to the invention;
Fig. 7. is a perspective view of a spectrophotometer instrument which may be docked in a docking apparatus according to the invention.

### Detailed Description of the Preferred Embodiments:

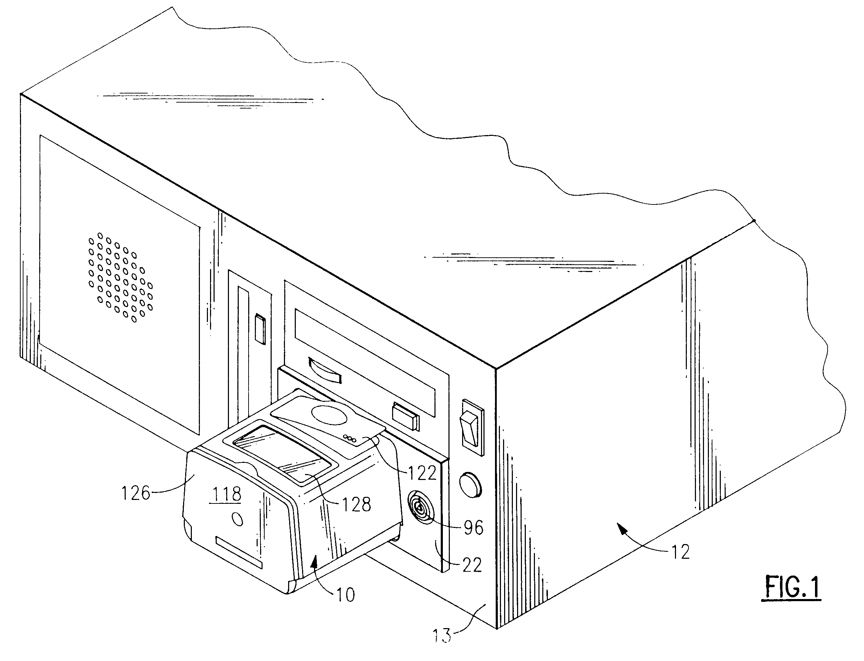

A depiction of an instrument 10 being docked in a docking apparatus according to the invention is shown in Fig. 1. The present invention is an apparatus for docking an instrument such as 10 in the interior of a computer assembly housing 12. The term "computer assembly" herein shall refer to any microprocessor based system that is enclosed in a protective housing. The most common form of computer assembly is the personal computer having a central processor unit an a plurality of input/output ports for receiving connections to, e.g., program memory devices, data storage memory devices, display devices, input devices such as keyboard and mouse inputs, and printers, all contained by a rectangular steel or polymeric housing. Meanwhile, the term "computer instrument" shall herein refer to any instrument having a housing capable of transmitting computer-readable data to the microprocessor of a computer system. The instrument may be a type of computer assembly or may be a device capable of storing computer-readable data, or of otherwise generating computer readable data. An instrument according to the invention will normally be smaller than a computer system. Normally, a computer instrument according to the invention is portable and hand-held. "Computer System" as used herein is a generic term covering both computer assemblies and computer instruments.

The instrument which is adapted to be docked in a docking station of the present invention may be, for example a spectrophotometer, a spectrofluorometer, a colorimeter, a densitometer, a filter photometer, or any other analytical instrument, control apparatus, or similar device.

A specific embodiment of the invention is shown in Figs. 1 through 5. In the embodiment shown in Figs. 1 through 5 apparatus 14 includes docking sleeve 16 adapted to be installed in a housing of a computer assembly shown as being provided by a personal computer. According to the invention, instrument 10 is received in sleeve 16 which is received in the interior of a personal computer housing. When the instrument is docked, sleeve 16 can be specially sized and manufactured to be installed in a disk drive port area 20 of a personal computer. It can be manufactured to have bolt holes 25 that align in position with pre-drilled bolt-receiving holes of a personal computer, and can be mass produced in a single size enabling it to be fitted in most personal computers in use.

Docking sleeve 16 comprises a rigid body 21 having attached thereto a face plate 22 that is substantially flush with the exterior of the computer assembly housing 13 when the sleeve is fully installed. Preferably, an inner edge 26 of the face plate 22 defines an opening that is shaped complementarily with the shape of the instrument housing 10 to improve the ease with which an instrument is received in the sleeve. It is seen that face plate 22 could be deleted and that its guiding and aligning functioning could be provided by a computer assembly housing 13 having an instrument reception opening shaped complementarily with a cross-section of an instrument housing. Further, guide members 28 which extend into the interior of the computer assembly housing 13 may be formed along the length of sleeve 16 to further aid in the reception of an instrument into the sleeve. Sleeve 16 may be securely attached to the housing interior by any conventional mounting means including by way of screws, bolts, clamps, or adhesives. Bolt holes 25 may be formed on threaded spacers 29 which may be provided to occupy space between sleeve 16 and a mounting member 12 (not shown) of assembly 12 on which a disk drive is normally mounted.

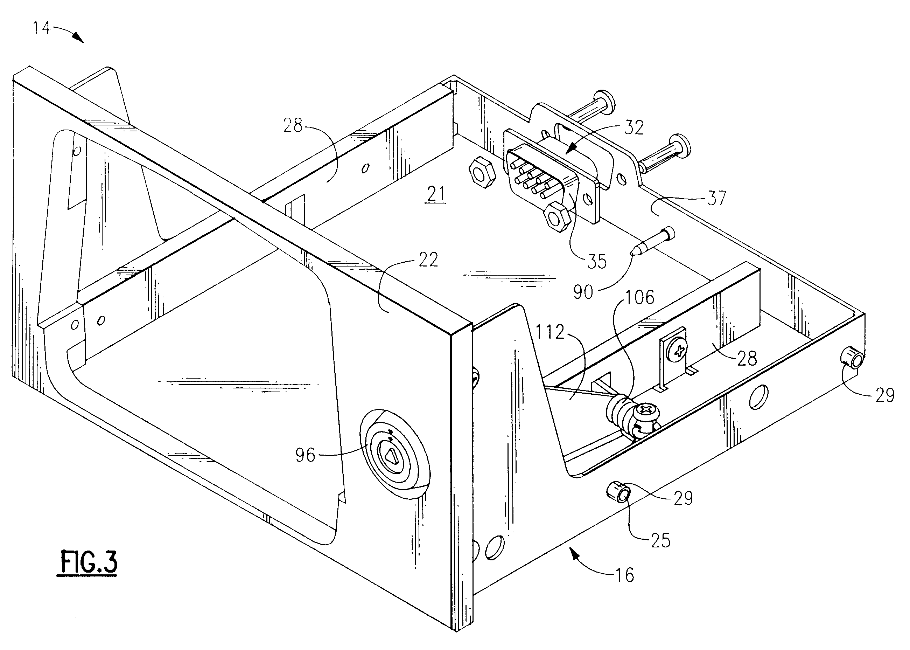

Preferably, face plate 22 is secured to the remainder of sleeve 16 before sleeve is installed in computer assembly housing 24. As best seen in Fig. 3, face plate 22 should define a larger area than the portion of body 21 that receives plate 22 so that an interior surface of face plate 22 abuts computer assembly housing 24 when sleeve 16 is installed, thereby limiting the amount of penetration of sleeve 16 into housing 24, and aiding the positioning of sleeve to a proper orientation in housing 24.

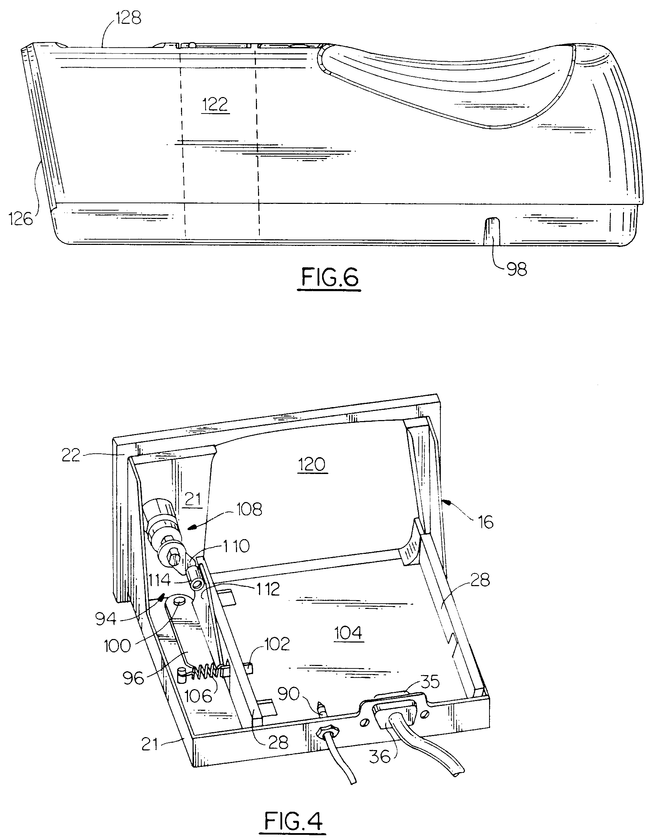

Docking apparatus 14 may further include electrical connection equipment components which facilitate both power and data communication between the computer assembly 12 and the instrument. In a preferred embodiment of the invention a standard computer data-transmission type connector is modified to facilitate both power transmission from the computer assembly to the instrument and data transmission (including instruction data) between the computer assembly and the instrument. A data transmission type connector 32 may be mounted to the docking sleeve which matingly receives a complementarily formed connector 34 of instrument 10 when an instrument is docked. In the embodiment of Fig. 4 connector 32 is shown as a two-ended connector having a first end 35 facing face plate 22 and second end 36 facing toward the back plate of computer assembly housing 13.

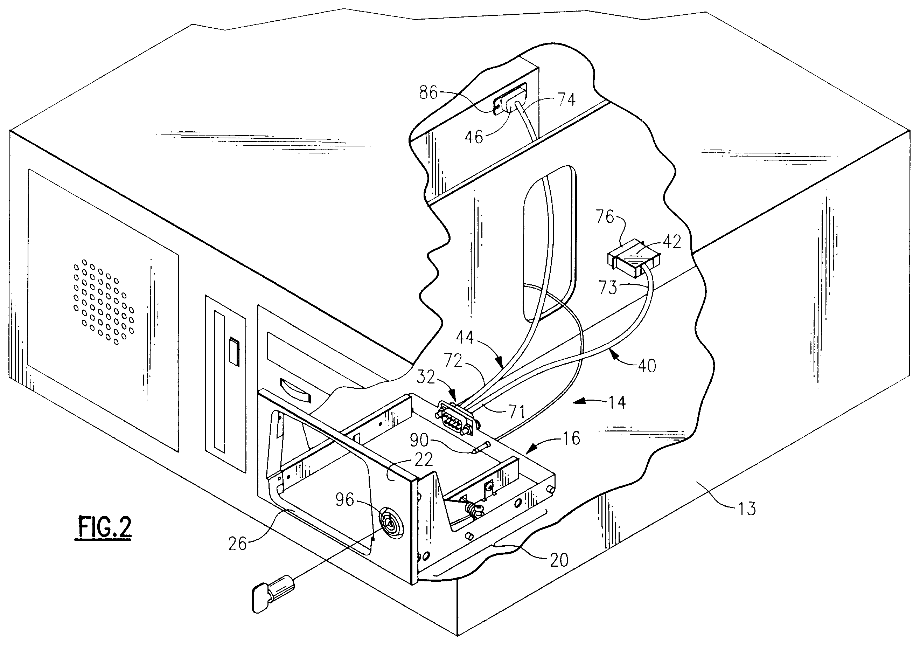

As seen in Fig. 2, a first cable lead 40 may be connected between connector 32 and power terminal 42 and a second cable lead 44 may be connected between connector 32 and port data terminal 46. Thereby, connector 32 is adapted both to supply power to instrument 10 and to provide data transmission between computer instrument 10 and computer assembly 12. In the embodiment shown, leads 40 and 42 are electrically attached to connector 48 which is matingly connected to sleeve connector 32 when docking sleeve 16 is installed. However, normally, connector 32 is mounted to rear member 37 of sleeve 16. Connector 32 could also be mounted on a side member, e.g. 28 of sleeve 16 perpendicular to the direction of instrument insertion. If connector 32 is installed in this way, sleeve 16 will be equipped with an actuating mechanism such as a spring-loaded mechanism for urging connector 32 laterally toward an instrument-receiving area of sleeve so that it is received by a side-mounted connector of an instrument when an instrument is docked. Leads 40 and 42 are appropriately insulated when attached to connector 48 which may be, for example, a standard computer RS type 232 or 422 pin and pin hole connector. By convention, connector 48 is female ended and connector end 36 of docking sleeve 16 is male ended, although this ordering is not critical. When leads 40 and 44 are attached to connector 48, a Y-shaped Y-adaptor is formed comprising pair of leads 40 and 44 and connector 48. A Y-adaptor according to the invention may be made by modifying an existing single conductor computer cable or by manufacturing a Y-shaped Y-adapter according to the requirements described herein.

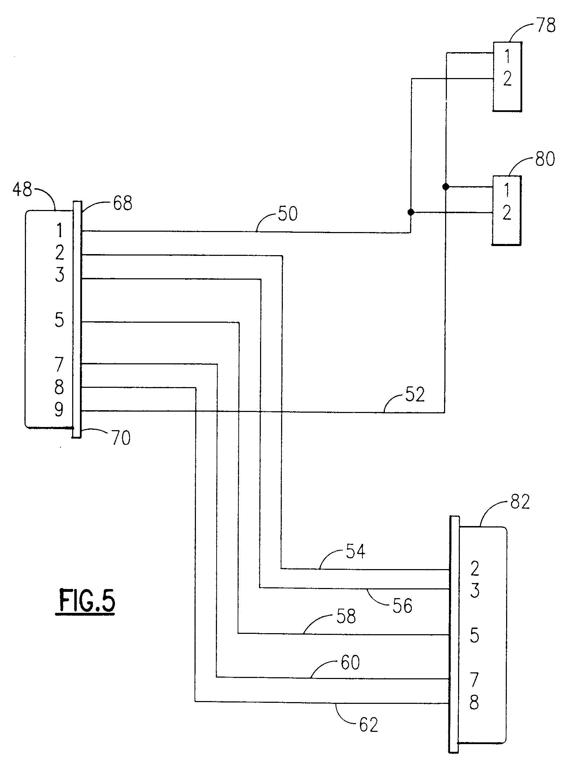

An electrical schematic diagram illustrating a power/data Y-adaptor according to the invention is shown in Fig. 5. First cable lead 40 connecting connector 48 and a power terminal comprised of two conductors 50 and 52, while cable lead 44 comprises a plurality of conductors 54, 56, 58, 60, 62 for facilitating transfers of data, including instruction data between a computer assembly 12 and a computer instrument 10. Data transfer wires 54, 56, 60, 62, are typically designated either as clear/send or transmit/receive wires in an order depending of the particular computer assembly in which the invention is implemented. In addition there is also a ground wire 58, which can be located proximate the center conductor of connector 48 so that data transfer wires of a first type (clear/send) may be electrically isolated from data transfer wires of a second type (transmit/receive). The number of data transfer wires required varies depending on the type of computer assembly, the type of instrument, and whether the data transfer is serial or peripheral.

Power transmission cable lead 40 seen in Figs. 2 and 5 includes a wire 50 for connection to a DC power supply and a wire 52 for connection to a power ground. Preferably wires 50, 52 are attached to conductors 68 and 70 at opposite points of connector 48 so that wires 50 and 52 are electrically isolated from one another.

It is seen further from Fig. 5 that while sleeve ends 71 and 72 of cable leads 40 and 44 are electrically attached to connector 32, that computer assembly ends 73 and 74 of cable leads 40, 44, respectively, may be attached to connectors as well for improving the ease with which the present docking apparatus is installed in a computer assembly.

In a typical personal computer type computer assembly there are connectors (usually female ended) available in the housing interior which define both DC power terminal and serial data transfer terminal locations.

DC power can normally be accessed from the interior of a personal computer housing from a connector such as 76 providing DC power. Accordingly, computer end 73 of cable lead 40 may be electrically attached to a pin-and-hole type computer connector 78 seen in Fig. 2 for matingly connecting cable lead 40 to DC terminal connector 76. An additional connector 80 of a type or size different from connector 78 can be electrically attached to cable lead 40 so that lead 40 is attachable to DC terminal connectors such as 76 of various sizes and types, which are normally located in proximity with a DC power supply of a computer assembly. Connectors 76 and 78 are commonly rounded pin-and-hole type computer connectors such as MOLEX type connectors.

As seen in Fig. 5, a connector 82 is also electrically attached at the computer end 74 of second cable lead 44 for connecting Y-adaptor 84 to data transfer port connector 86 accessible from a personal computer's interior. In general, serial and/or peripheral data transport connectors, such as 82, are located on a communication port of a motherboard or on an external input/output port of a computer assembly.

Of course, while advantageous, it is not necessary for practicing the invention that connector 32 is adapted to provide both a power terminal and a data communication terminal. Connector can be adapted to provide data communication only, and instrument 10 can be powered by battery power.

In the alternative, connector 32 can be adapted for data communication only and an additional connector 90 can be installed on sleeve 16 which is in communication with a power terminal of assembly 12 and specially adapted to supply power to instrument 10. Connector 90 may be, for example, a DC plug and hole type connector which matingly connects to connector 92 of instrument, normally designated to receive a connector or a battery recharging adaptor. While sleeve 16 is shown as being provided by a body 21 having face plate 22 attached thereto, the docking sleeve can be of virtually any size and configuration provided sleeve 16 positions sleeve connector 32 in a stable position within housing 13 so that it receives an instrument connector 34 when an instrument is inserted through an opening of a computer assembly housing. In a simplified embodiment, docking sleeve 16 can comprise a single mounting member which mounts a connector within housing 13 so that an end of the connector faces an opening in computer assembly housing 13 formed to accommodate insertion of a computer instrument.

Referring now to further aspects of the invention is seen in Fig. 4, that docking sleeve 16 may be equipped with a locking device 94 for securely locking instrument 10 to sleeve 16 for the purpose of preventing unauthorized removal of the instrument 10 from the sleeve or housing 13. Locking device 94 can include a key hole 96 opening toward the sleeve face plate 22. When device 94 is actuated, locking member 96 engages a formation, such as a notch 98, formed on instrument 10 to lock an instrument 10 in a locked position.

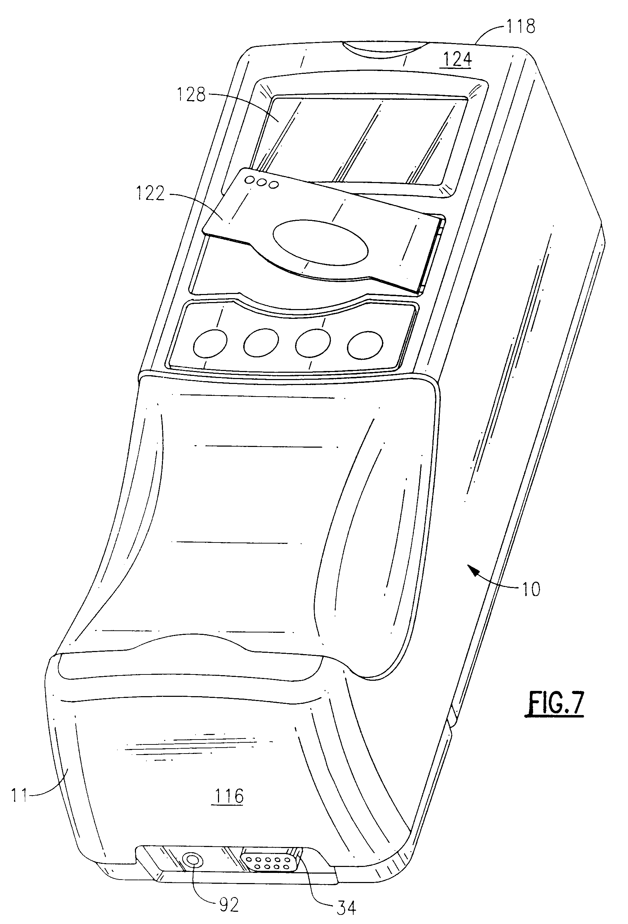

In the embodiment best seen in Fig. 4 locking member 96 is installed on sleeve 16 to pivot about pivot pin 100. Locking member 96 pivots between a first position wherein pin 102 is completely extracted from the instrument-receiving area 104 of sleeve 16 and a second position, as shown, wherein pin 102 penetrates the pin receiving area to engage a formation formed on the instrument when an instrument is docked. Spring 106 normally biases locking member 96 in the first position so that pin 102 is normally extracted from instrument receiving area 104 so as to allow free moving an instrument into and out of sleeve 16. When locking mechanism 108 is actuated, crank 110 of locking mechanism engages tail 112 of locking member 96 in order to urge locking member 96 and its associated pin 102 toward instrument receiving area 104 so that pin 102 engages a formation on instrument to thereby lock instrument in a locked position. Barrel 114 may be disposed about an arm of crank 110 to improve the engagement between crank 110 and tail 112. A pin-receiving formation of instrument 10 is conveniently provided by a notch 98 as best seen in Fig. 6.

Instrument 10 adapted for docking in docking apparatus 14 normally comprises a rigid instrument housing 11 having a distal end 116 adapted to extend inwardly into a computer assembly housing 13 when docked, and a proximal end 118 extending at least partially outwardly from a computer assembly housing 13 when the instrument is docked. For best functioning of the docking apparatus, instrument 10 should have a substantially uniform cross section that is shaped to complement opening 120 defined by inner edge 26 of docking sleeve's face plate 22. While the cross-section instrument housing 11 can be circular it is preferably of a geometric configuration such that the instrument is oriented to a predetermined orientation in the computer assembly housing 13 when it is received in the computer assembly housing 13. For example the cross section of housing 11 can be elliptical, triangular, star shaped, semi-circular or substantially rectangular as shown.

In one embodiment of the invention the instrument is a spectrophotometer having a transmittance cell 122 for receiving material-containing vials or other small samples. When the instrument is a spectrophotometer having a transmittance cell 122, transmittance cell 122 is oriented to open toward housing top 124 and is disposed in proximity with proximal end 118 of the instrument housing 11 so that the transmittance cell 122 is completely exposed when the instrument is fully docked as seen in Fig. 1. With this design, samples cans be inserted into the transmittance cell 122 for analysis when a spectrophotometer instrument adapted for use with the present invention is fully docked. The relative positioning of connector 34 at distal end 116 of housing 11 and the transmittance cell 122 opening toward top 124 of housing 11 allows samples to be analyzed when a housing is docked even in the case where housing is docked in a docking apparatus other that described herein, such as the single-cable connecting system described in the background of the invention section of the application.

With reference further to the specific embodiment of an instrument shown in Figs. 6 and 7, wherein the instrument is provided by a spectrophotometer instrument includes a screen display 128 disposed in a top surface 124 of instrument housing 11, and further includes a transmittance cell 122 opening toward the top surface 124. It is seen further that instrument 10 includes a reflectance measurement plate 126 disposed at proximal end 118 of instrument housing 11 in a generally perpendicular orientation in relation to screen display 128. During reflectance spectrophotomic analysis (wherein light is directed toward a sample, and reflects off a sample before it is transmitted to a detector), reflectance plate 126 is abutted against a flat surface. Most commonly, reflectance plate 126 is abutted against vertical surface such as a wall during reflectance measurement. Meanwhile, during transmittance spectrophotomic measuring (wherein light passes through a sample and is transmitted to a detector), housing 11 is laid on flat surface, such as a table. During both types of measuring, reflectance and transmittance, it can be seen that display screen 128 is oriented toward substantially the same orientation. Specifically, screen 128 is oriented to a substantially vertical position during measuring, wherein it is easily viewed by a user, whether the spectrophotometer instrument is in a reflectance or transmittance analysis mode. The relative positioning of screen display 128, transmittance cell 122 which opens toward the same top surface on which the screen display is disposed, and reflectance measurement plate 126 which is disposed at proximal end in generally perpendicular relation with respect to screen 128, is critical since the configuration provides for consistent, easy viewing of a single screen 128 by a user no matter the mode of operation of the device.

The ease with which screen display 128 can be viewed can be enhanced further still by disposing reflectance plate 126 at a slight angle with respect to top 124 and or screen 128 as best seen in Fig. 6 so that screen 128 and/or housing 11 extend slightly downwardly when reflectance plate is abutted against a vertical surface. In addition or in the alternative, screen display 128 can be angled slightly toward distal end 116.

While the present invention has been explained with reference to a number of specific embodiments, it will be understood that the spirit and scope of the present invention should be determined with reference to the appended claims.

According to its broadest aspect the invention relates to an apparatus for attaching a computer instrument to a computer assembly, said computer assembly having an assembly housing and a data terminal, said instrument having disposed thereon an instrument connector, said apparatus comprising:
a docking sleeve adapted to be installed in an interior of said assembly housing.

It should be noted that the objects and advantages of the invention may be attained by means of any compatible combination(s) particularly pointed out in the items of the following summary of the invention and the appended claims.

### SUMMARY OF THE INVENTION

1. An apparatus for attaching a computer instrument to a computer assembly, said computer assembly having an assembly housing and a data terminal, said instrument having disposed thereon an instrument connector, said apparatus comprising:
   a docking sleeve adapted to be installed in an interior of said assembly housing, said docking sleeve further being adapted to receive said instrument; and
   a sleeve connector disposed on said docking sleeve, said sleeve connector adapted to receive said instrument connector when said instrument is docked.
2. The apparatus wherein said sleeve comprises a body having a distal end, and wherein said sleeve connector is disposed at said distal end so that said sleeve connector receives said instrument connector when said instrument is urged toward said distal end.
3. The apparatus wherein said docking sleeve comprises a face plate disposed at a proximal end of said sleeve, said face plate including an inner edge defining an opening shaped complementarily with a cross-section of said instrument so that said face plate guides and aligns said instrument when said instrument is inserted in said sleeve.
4. The apparatus wherein said docking sleeve further includes a frame and a locking device disposed on said frame for locking said instrument in a locked position in said sleeve when said instrument has been docked.
5. The apparatus wherein said sleeve connector is provided by a pin-and-hole type computer connector.
6. The apparatus further comprising conductor means electrically attached to said sleeve connector and adapted for electrical attachment to said data terminal.
7. The apparatus wherein said computer assembly further comprises a power terminal, and wherein said apparatus further comprises:
   conductor means electrically attached to said sleeve connector, said conductor means adapted for electrical attachment to said data terminal, said conductor means further being adapted for electrical attachment to said power terminal.
8. The apparatus wherein said apparatus further includes a power terminal, and wherein said apparatus further comprises a Y-adaptor electrically attached to said sleeve connector, said Y-adaptor being adapted for electrical attachment to said data terminal, and further being adapted for attachment to said power terminal so that said Y-adaptor provide electrical communication between said sleeve connector and said data transmission terminal and further provides electrical communication between said sleeve connector and said power terminal when said instrument connector is connected to said sleeve connector.
9. The apparatus wherein said docking sleeve further includes a body and a locking device disposed on said body for locking said instrument in a locked position in said sleeve when said instrument has been docked, said locking device comprising:
   a locking member pivotally mounted on said sleeve and having a pin, said locking member pivoting between a first position wherein said pin is extracted from said instrument receiving area and a second position wherein said pin extend into said pin receiving area to engage said instrument when an instrument is docked;
   means for normally biasing said locking member in said first position; and
   actuating means for moving said locking member from said first position to said second position to engage an instrument when an instrument has been docked.
10. The apparatus wherein said docking sleeve further includes an instrument receiving area, a frame and a locking device disposed on said frame for locking said instrument in a locked position in said sleeve when said instrument has been docked, said locking device comprising:
   a locking member pivotally mounted on said sleeve and having a pin, said locking member pivoting between a first position wherein said pin is extracted from said instrument receiving area and a second position wherein said pin extend into said pin receiving area to engage said instrument when an instrument is docked;
   spring means for normally biasing said locking member in said first position;
   crank means for moving said locking member from said first position to said second position to engage an instrument when an instrument has been docked; and
   a locking mechanism disposed on said sleeve for actuating said crank to move said locking member between said first and second positions.
11. The apparatus wherein said docking sleeve further includes an instrument receiving area, a frame having a face plate, and a locking device disposed on said frame for locking said instrument in a locked position in said sleeve when said instrument has been docked, said locking device comprising:
   a locking member pivotally mounted on said sleeve and having a pin, said locking member pivoting between a first position wherein said pin is extracted from said instrument receiving area and a second position wherein said pin extends into said pin receiving area to engage said instrument when an instrument is docked;
   spring means for normally biasing said locking member in said first position;
   crank means for moving said locking member from said first position to said second position to engage an instrument when an instrument has been docked; and
   a locking mechanism disposed on said sleeve for actuating said crank to move said locking member between said first and second positions, said locking mechanism having a key hole opening toward said face plate.
12. The apparatus wherein said sleeve further includes a guide members adapted to extend inward into said assembly housing when said sleeve is installed, for guiding insertion of an instrument into said sleeve.
13. The apparatus wherein said sleeve comprises a body having a rear member, and wherein said sleeve connector is disposed at said rear member so that said sleeve connector receives said instrument connector when said instrument is urged, toward said distal end.
14. A computer assembly apparatus adapted to receive a computer instrument, said computer assembly apparatus comprising:
   a housing having an interior and an assembly opening;
   a data transmission terminal; and
   a docking apparatus disposed in said housing interior, said docking apparatus comprising:
      a sleeve installed in said housing interior, said sleeve having a distal end;
      a sleeve connector installed on said sleeve opposite said opening; and
      conductor means connecting said data transmission terminal and said sleeve connector.
15. The apparatus wherein said sleeve comprises a body having a distal end, and wherein said sleeve connector is disposed at said distal end so that said sleeve connector receives said instrument connector when said instrument is urged toward said distal end.
16. The apparatus wherein said docking sleeve comprises a face plate disposed at a proximal end of said sleeve, said face plate having an inner surface abutting said assembly housing about said assembly opening, said face plate including an inner edge defining an opening shaped complementarily with a cross-section of said instrument so that said face plate guides and aligns said instrument when said instrument is inserted in said sleeve.
17. The apparatus wherein said assembly housing opening is shaped complementarily with a cross-section of said instrument so that said face plate guides and aligns said instrument when said instrument is inserted in said sleeve.
18. The apparatus wherein said docking sleeve further includes a frame and a locking device disposed on said frame for locking said instrument in a locked position in said sleeve when said instrument has been docked.
19. The apparatus wherein said sleeve connector is provided by a pin-and-hole type computer connector.
20. The apparatus wherein said computer assembly further comprises a power terminal, and wherein said apparatus conductor means further electrically attaches said sleeve connector to said power terminal.
21. The apparatus wherein said apparatus further includes a power terminal, and wherein said conductor means comprises a Y-adaptor electrically attaching said sleeve connector to said data terminal, and further electrically attaching said sleeve connector to said power terminal so that said Y-adaptor provides electrical communication between said sleeve connector and said data transmission terminal and further provides electrical communication between said sleeve connector and said power terminal.
22. The apparatus wherein said docking sleeve further includes a body and a locking device disposed on said body for locking said instrument in a locked position in said sleeve when said instrument has been docked, said locking device comprising:
   a locking member pivotally mounted on said sleeve and having a pin, said locking member pivoting between a first position wherein said pin is extracted from said instrument receiving area and a second position wherein said pin extend into said pin receiving area to engage said instrument when an instrument is docked;
   means for normally biasing said locking member in said first position; and
   actuating means for moving said locking member from said first position to said second position to engage an instrument when an instrument has been docked.
23. The apparatus wherein said docking sleeve further includes an instrument receiving area, a body and a locking device disposed on said frame for locking said instrument in a locked position in said sleeve when said instrument has been docked, said locking device comprising:
   a locking member pivotally mounted on said sleeve and having a pin, said locking member pivoting between a first position wherein said pin is extracted from said instrument receiving area and a second position wherein said pin extend into said pin receiving area to engage said instrument when an instrument is docked;
   spring means for normally biasing said locking member in said first position;
   crank means for moving said locking member from said first position to said second position to engage an instrument when an instrument has been docked; and
   a locking mechanism disposed on said sleeve for actuating said crank to move said locking member between said first and second positions.
24. The apparatus wherein said docking sleeve further includes an instrument receiving area, a body having a face plate, and a locking device disposed on said body for locking said instrument in a locked position in said sleeve when said instrument has been docked, said locking device comprising:
   a locking member pivotally mounted on said sleeve and having a pin, said locking member pivoting between a first position wherein said pin is extracted from said instrument receiving area and a second position wherein said pin extends into said pin receiving area to engage said instrument when an instrument is docked;
   spring means for normally biasing said locking member in said first position;
   crank means for moving said locking member from said first position to said second position to engage an instrument when an instrument has been docked; and
   a locking mechanism disposed on said sleeve for actuating said crank to move said locking member between said first and second positions, said locking mechanism having a key hole opening toward said face plate.
25. The apparatus wherein said sleeve further includes a guide members adapted to extend inward into said assembly housing when said sleeve is installed, for guiding insertion of an instrument into said sleeve.
26. The apparatus wherein said sleeve comprises a body having a rear member, and wherein said sleeve connector is disposed at said rear member so that said sleeve connector receives said instrument connector when said instrument is urged toward said distal end.
27. A hand-held spectrophotometer instrument comprising:
   an instrument housing having a distal end and a top;
   a connector disposed at said distal end, for interfacing said instrument to a computer assembly;
   a transmittance cell opening toward said housing top so that said samples can be received in said transmittance cell while said spectrophotometer is interfaced with a computer assembly.
28. A hand-held spectrophotometer instrument comprising:
   an instrument housing having first and second ends and a top;
   a screen display disposed at said top;
   a transmittance cell opening toward said top; and
   a reflectance plate disposed at said first end in generally perpendicular relation with said screen, so that said screen display is oriented in a similar direction whether said spectrophotometer instrument is laid on a flat surface during a transmittance mode of operation, or whether said reflectance plate is abutted against a vertically oriented surface during reflectance mode of operation.
29. The spectrophotometer instrument
   wherein said screen display is disposed in a predetermined plane and wherein said reflectance plate is disposed at a predetermined angle with respect to said screen display plane so that said screen is angled by said predetermined angle toward a user for improved viewing of said screen display when said reflectance plate is abutted against a vertical surface during reflectance mode of operation.
30. The spectrophotometer instrument wherein said screen display is disposed at a predetermined angle in Said top with respect to the horizontal plane so that said screen display is angled by said predetermined angle toward a user when said instrument is laid on a flat surface during transmittance mode of operation.

## Claims

1. An apparatus for attaching a computer instrument to a computer assembly, said computer assembly having an assembly housing and a data terminal, said instrument having disposed thereon an instrument connector, said apparatus comprising:
a docking sleeve adapted to be installed in an interior of said assembly housing, said docking sleeve further being adapted to receive said instrument; and
a sleeve connector disposed on said docking sleeve, said sleeve connector adapted to receive said instrument connector when said instrument is docked.

2. The apparatus of claim 1, wherein said sleeve comprises a body having a distal end, and wherein said sleeve connector is disposed at said distal end so that said sleeve connector receives said instrument connector when said instrument is urged toward said distal end.

3. The apparatus of claim 1, wherein said docking sleeve comprises a face plate disposed at a proximal end of said sleeve, said face plate including an inner edge defining an opening shaped complementarily with a cross-section of said instrument so that said face plate guides and aligns said instrument when said instrument is inserted in said sleeve.

4. The apparatus of claim 1, wherein said docking sleeve further includes a frame and a locking device disposed on said frame for locking said instrument in a locked position in said sleeve when said instrument has been docked,
and/or wherein preferably said sleeve connector is provided by a pin-and-hole type computer connector,
and/or preferably, further comprising conductor means electrically attached to said sleeve connector and adapted for electrical attachment to said data terminal,
and/or wherein preferably said computer assembly further comprises a power terminal, and wherein said apparatus further comprises:
conductor means electrically attached to said sleeve connector, said conductor means adapted for electrical attachment to said data terminal, said conductor means further being adapted for electrical attachment to said power terminal,
and/or wherein preferably said apparatus further includes a power terminal, and wherein said apparatus further comprises a Y-adaptor electrically attached to said sleeve connector, said Y-adaptor being adapted for electrical attachment to said data terminal, and further being adapted for attachment to said power terminal so that said Y-adaptor provide electrical communication between said sleeve connector and said data transmission terminal and further provides electrical communication between said sleeve connector and said power terminal when said instrument connector is connected to said sleeve connector,
and/or wherein preferably said docking sleeve further includes a body and a locking device disposed on said body for locking said instrument in a locked position in said sleeve when said instrument has been docked, said locking device comprising:
a locking member pivotally mounted on said sleeve and having a pin, said locking member pivoting between a first position wherein said pin is extracted from said instrument receiving area and a second position wherein said pin extend into said pin receiving area to engage said instrument when an instrument is docked;
means for normally biasing said locking member in said first position; and
actuating means for moving said locking member from said first position to said second position to engage an instrument when an instrument has been docked,
and/or wherein preferably said docking sleeve further includes an instrument receiving area, a frame and a locking device disposed on said frame for locking said instrument in a locked position in said sleeve when said instrument has been docked, said locking device comprising:
a locking member pivotally mounted on said sleeve and having a pin, said locking member pivoting between a first position wherein said pin is extracted from said instrument receiving area and a second position wherein said pin extend into said pin receiving area to engage said instrument when an instrument is docked;
spring means for normally biasing said locking member in said first position;
crank means for moving said locking member from said first position to said second position to engage an instrument when an instrument has been docked; and
a locking mechanism disposed on said sleeve for actuating said crank to move said locking member between said first and second positions,
and/or wherein preferably said docking sleeve further includes an instrument receiving area, a frame having a face plate, and a locking device disposed on said frame for locking said instrument in a locked position in said sleeve when said instrument has been docked, said locking device comprising:
a locking member pivotally mounted on said sleeve and having a pin, said locking member pivoting between a first position wherein said pin is extracted from said instrument receiving area and a second position wherein said pin extends into said pin receiving area to engage said instrument when an instrument is docked;
spring means for normally biasing said locking member in said first position;
crank means for moving said locking member from said first position to said second position to engage an instrument when an instrument has been docked; and
a locking mechanism disposed on said sleeve for actuating said crank to move said locking member between said first and second positions, said locking mechanism having a key hole opening toward said face plate,
and/or wherein preferably said sleeve further includes a guide members adapted to extend inward into said assembly housing when said sleeve is installed, for guiding insertion of an instrument into said sleeve,
and/or wherein preferably said sleeve comprises a body having a rear member, and wherein said sleeve connector is disposed at said rear member so that said sleeve connector receives said instrument connector when said instrument is urged toward said distal end.

5. A computer assembly apparatus adapted to receive a computer instrument, said computer assembly apparatus comprising:
a housing having an interior and an assembly opening;
a data transmission terminal; and
a docking apparatus disposed in said housing interior, said docking apparatus comprising:
a sleeve installed in said housing interior, said sleeve having a distal end;
a sleeve connector installed on said sleeve opposite said opening; and
conductor means connecting said data transmission terminal and said sleeve connector.

6. The apparatus of claim 5, wherein said sleeve comprises a body having a distal end, and wherein said sleeve connector is disposed at said distal end so that said sleeve connector receives said instrument connector when said instrument is urged toward said distal end,
and/or wherein preferably said docking sleeve comprises a face plate disposed at a proximal end of said sleeve, said face plate having an inner surface abutting said assembly housing about said assembly opening, said face plate including an inner edge defining an opening shaped complementarily with a cross-section of said instrument so that said face plate guides and aligns said instrument when said instrument is inserted in said sleeve,
and/or wherein preferably said assembly housing opening is shaped complementarily with a cross-section of said instrument so that said face plate guides and aligns said instrument when said instrument is inserted in said sleeve,
and/or wherein preferably said docking sleeve further includes a frame and a locking device disposed on said frame for locking said instrument in a locked position in said sleeve when said instrument has been docked,
and/or wherein preferably said sleeve connector is provided by a pin-and-hole type computer connector,
and/or wherein preferably said computer assembly further comprises a power terminal, and wherein said apparatus conductor means further electrically attaches said sleeve connector to said power terminal,
and/or wherein preferably said apparatus further includes a power terminal, and wherein said conductor means comprises a Y-adaptor electrically attaching said sleeve connector to said data terminal, and further electrically attaching said sleeve connector to said power terminal so that said Y-adaptor provides electrical communication between said sleeve connector and said data transmission terminal and further provides electrical communication between said sleeve connector and said power terminal,
and/or wherein preferably said docking sleeve further includes a body and a locking device disposed on said body for locking said instrument in a locked position in said sleeve when said instrument has been docked, said locking device comprising;
a locking member pivotally mounted on said sleeve and having a pin, said locking member pivoting between a first position wherein said pin is extracted from said instrument receiving area and a second position wherein said pin extend into said pin receiving area to engage said instrument when an instrument is docked;
means for normally biasing said locking member in said first position; and
actuating means for moving said locking member from said first position to said second position to engage an instrument when an instrument has been docked,
and/or wherein preferably said docking sleeve further includes an instrument receiving area, a body and a locking device disposed on said frame for locking said instrument in a locked position in said sleeve when said instrument has been docked, said locking device comprising:
a locking member pivotally mounted on said sleeve and having a pin, said locking member pivoting between a first position wherein said pin is extracted from said instrument receiving area and a second position wherein said pin extend into said pin receiving area to engage said instrument when an instrument is docked;
spring means for normally biasing said locking member in said first position;
crank means for moving said locking member from said first position to said second position to engage an instrument when an instrument has been docked; and
a locking mechanism disposed on said sleeve for actuating said crank to move said locking member between said first and second positions,
and/or wherein preferably said docking sleeve further includes an instrument receiving area, a body having a face plate, and a locking device disposed on said body for locking said instrument in a locked position in said sleeve when said instrument has been docked, said locking device comprising:
a locking member pivotally mounted on said sleeve and having a pin, said locking member pivoting between a first position wherein said pin is extracted from said instrument receiving area and a second position wherein said pin extends into said pin receiving area to engage said instrument when an instrument is docked;
spring means for normally biasing said locking member in said first position;
crank means for moving said locking member from said first position to said second position to engage an instrument when an instrument has been docked; and
a locking mechanism disposed on said sleeve for actuating said crank to move said locking member between said first and second positions, said locking mechanism having a key hole opening toward said face plate,
and/or wherein preferably said sleeve further includes a guide members adapted to extend inward into said assembly housing when said sleeve is installed, for guiding insertion of an instrument into said sleeve,
and/or wherein preferably said sleeve comprises a body having a rear member, and wherein said sleeve connector is disposed at said rear member so that said sleeve connector receives said instrument connector when said instrument is urged toward said distal end.

7. A hand-held spectrophotometer instrument comprising:
an instrument housing having a distal end and a top;
a connector disposed at said distal end, for interfacing said instrument to a computer assembly;
a transmittance cell opening toward said housing top so that said samples can be received in said transmittance cell while said spectrophotometer is interfaced with a computer assembly.

8. A hand-held spectrophotometer instrument comprising:
an instrument housing having first and second ends and a top;
a screen display disposed at said top;
a transmittance cell opening toward said top; and
a reflectance plate disposed at said first end in generally perpendicular relation with said screen, so that said screen display is oriented in a similar direction whether said spectrophotometer instrument is laid on a flat surface during a transmittance mode of operation, or whether said reflectance plate is abutted against a vertically oriented surface during reflectance mode of operation.

9. The spectrophotometer instrument of claim 8, wherein said screen display is disposed in a predetermined plane and wherein said reflectance plate is disposed at a predetermined angle with respect to said screen display plane so that said screen is angled by said predetermined angle toward a user for improved viewing of said screen display when said reflectance plate is abutted against a vertical surface during reflectance mode of operation,
and/or wherein preferably
said screen display is disposed at a predetermined angle in said top with respect to the horizontal plane so that said screen display is angled by said predetermined angle toward a user when said instrument is laid on a flat surface during transmittance mode of operation.

10. An apparatus for attaching a computer instrument to a computer assembly, said computer assembly having an assembly housing and a data terminal, said instrument having disposed thereon an instrument connector, said apparatus comprising:
a docking sleeve adapted to be installed in an interior of said assembly housing.
